# EUROPEAN PATENT SPECIFICATION

(11) **EP 1 937 060 B1**
(45) Date of publication and mention of the grant of the patent: **14.08.2019**
(21) Application number: 06802406.6
(22) Date of filing: 25.08.2006
(51) Int. Cl.: A01N 1/02

(54) **MACHINE PERFUSION OF TISSUE GRAFTS FOR TRANSPLANTATION**
MASCHINELLE PERFUSION VON GEWEBETRANSPLANTATEN FÜR DIE TRANSPLANTATION
PERFUSION MECANIQUE DE GREFFONS TISSULAIRES A TRANSPLANTER

(30) Priority: 25.08.2005 US 710881 P; 24.08.2006 US 509017
(43) Date of publication of application: 02.07.2008
(73) Proprietor: Organ Recovery Systems, Inc., Itasca IL 60143 (US)
(72) Inventor: Arrington, Ben, O'mar, East Stroudsburg, PA 18301 (US)
(74) Representative: Gill Jennings & Every LLP
(86) International application number: PCT/US2006/033365
(87) International publication number: WO 2007/025215

(56) References cited:
- WO-A1-01/01774
- CA-A1- 2 112 952
- US-A- 4 186 565
- US-A- 6 046 046
- US-A- 6 100 082
- US-A1- 2003 118 980
- US-A1- 2004 224 298
- US-A1- 2004 224 298
- US-A1- 2005 026 132
- US-A1- 2005 153 271
- S Hayashi ET AL: "Combination splitting using both in situ and ex situ techniques in triple split liver transplantation in pigs", Transplant International, 1 December 1998 (1998-12-01), pages 408-412, XP055086634, Berlin/Heidelberg DOI: 10.1007/s001470050166 Retrieved from the Internet: URL:http://onlinelibrary.wiley.com/store/1 0.1111/j.1432-2277.1998.tb00828.x/asset/j. 1432-2277.1998.tb00828.x.pdf?v=1&t=hnlvj4a g&s=9b164d2c169ad88b440ebf8d4995b4fc6b96c0 29
- GUARRERA J V ET AL: "Hypothermic machine perfusion of liver grafts for transplantation: Technical development in human discard and miniature swine models", TRANSPLANTATION PROCEEDINGS, ELSEVIER INC, ORLANDO, FL; US, vol. 37, no. 1, 1 January 2005 (2005-01-01), pages 323-325, XP027611489, ISSN: 0041-1345 [retrieved on 2005-01-01]
- GUARRERA J.V. ET AL.: 'Hypothemic Machine Perfusion of Liver Grafts for Transplantation: Technical Development in Human Dicard and Miniature Swine Models' TRANSPLANTATION PROCEEDINGS vol. 37, no. 1, January 2005 - February 2005, pages 323 - 325, XP004819937
- CHRISTIANSEN H B ET AL: "Enhancement of the alpha-adrenergic inotropic component of noradrenaline by simultaneous stimulation of muscarinic acetylcholine receptors in rat myocardium", EUROPEAN JOURNAL OF PHARMACOLOGY, ELSEVIER SCIENCE, NL, vol. 142, no. 1, 6 October 1987 (1987-10-06), pages 93-102, XP025957976, ISSN: 0014-2999, DOI: 10.1016/0014-2999(87)90657-1 [retrieved on 1987-10-06]
- KAROW A M ET AL: "Functional preservation of the mammalian kidney. V. pharmacokinetics of dimethyl sulfoxide (1.4 M) in kidneys (rabbit and dog) perfused at 37, 25, or 10<o>C followed by transplantation (dog)", JOURNAL OF SURGICAL RESEARCH, ACADEMIC PRESS INC., SAN DIEGO, CA, US, vol. 27, no. 2, 1 August 1979 (1979-08-01) , pages 93-99, XP026359512, ISSN: 0022-4804 [retrieved on 1979-08-01]

## Description

### FIELD OF THE INVENTION

The invention relates to the field of organ and biological tissue preservation. In particular, the invention relates to machine perfusion for the preservation of organs and biological tissues for implant and/or transplant.

### BACKGROUND

Organ transplantation is the only treatment option for people with end stage organ disorders. While organ transplants continue to become more common and successful, lack of usable donor organs prevents a large number of people from having a transplant. For example, one of the donor organs that is most difficult to obtain is the liver. According to the Scientific Registry of Organ Transplant, at the end of 2004, more than 17,000 people in the United States were on the waiting list to receive a liver transplant. By contrast, in the same year, fewer than 6,000 liver transplants were performed, and approximately 1,800 people on the waiting list died without a transplant. It is of primary concern in the field to develop better methods for preserving and preparing donor organs for transplant to maximize the number of organs that are available for use.

Improved processes for preservation and preparation of donor organs will allow a broader range of available organs to be made amenable for transplantation. Increasing the time for which an organ can be preserved is important, as it allows for organ sharing among transplant centers, careful preoperative preparation of the recipient, time for preliminary donor culture results to become available, and time for vascular repairs of the organ prior to implantation. Further, a method is needed that not only increases the storage time of an organ, but actually provides a way to make the organ more amenable to transplant. There are many donor organs that are considered marginal, usually because their donors are elderly or have certain medical conditions. Marginal organs often show delayed graft function which can lead to the failure of a transplant.

Cold storage (CS) is the standard preservation technique for most organ transplantation procedures. CS preservation is a straightforward procedure that involves flushing the organ with cold preservation solution followed by submersion and storage of the organ in cold preservation solution. While CS preservation is adequate for many organs, many transplant centers have resorted to more aggressive use of marginal livers in response to the growing waiting list (see Rocha et al. Transplant Proc. 2004 May;36(4):914-5 for example).

Preservation injury is a major mechanism of graft disfunction, especially in marginal or injured grafts. The ischemia and reperfusion events that occur during preservation account for only part of this damage. For vascular organs, such as the liver and kidneys, damage from ongoing metabolism can also be acute. Most current organ preservation methods, such as CS, are designed to quickly cool the organ and keep it in a static state. Cooling the organ has the effect of slowing metabolism greatly, but does not stop it. Thus, there are still cellular substrates being consumed and metabolites being produced. For vascular organs, the process of metabolism can be especially damaging, as these organs naturally function in the presence of blood flow that provides the necessary substrates to and removes wastes products from the system.

There are several tests that can be done on the effluent of a harvested organ to predict its suitability for transplant. Tests for a specific enzymatic activity or concentration of a metabolite can help determine whether an organ has internal damage that might lead to poor graft function. During CS, there is no perfusate flowing through the organ, making it impossible to periodically monitor its condition. For marginal organs to be successfully utilized, it is desirable to be able to monitor the condition of the organ from the time it is removed from the donor until it is transplanted into the recipient. This way, the transplant team will know if an organ has a reasonable chance of displaying good graft function.

Another technique that has grown in popularity due to the great shortage of organs is organ splitting. Organ splitting involves separating the organ into two or more functioning parts and transplanting each part into a separate patient. This way, one donor organ can be made into two or more grafts. While organ splitting has shown great promise to provide for more patients in need of a transplant, current organ splitting techniques have several disadvantages which prevent their widespread use. Presently, organ splitting is performed either *ex situ* during CS *in situ* or during procurement of the organ.

*Ex situ* organ splitting performed during CS has several distinct disadvantages. As the organ needs to be manipulated, there is the risk of it being warmed by operating room lights and the surgeon's hands. As described above, warming of the organ increases the rate of the metabolic processes of the organ, causing damage to cells and tissue. Further, because there is no storage fluid flowing through the organ, there is no way to tell if its vessels are intact. Leaking vessels that are not repaired can cause blood loss and hamper graft function after transplant.

While *in situ* organ splitting avoids the problems associated with *ex situ* splitting, it is a complicated procedure requiring great manpower and expense. Because of its complexities, *in situ* organ splitting can add up to four hours to the organ procurement process. *In situ* organ splitting is often performed by the most experienced surgeon of the transplant unit, which often requires that the surgeon travel to a donor site far from the site where the transplant will be done. This leaves the transplant team without its most senior member for consultation. Also, because *in situ* splitting must be performed in the presence of low blood flow, other organs that could be procured from the donor may be damaged during the procedure.

Overall, improvements in preservation, pre-transplant assessment, *ex vivo* resuscitation and organ splitting have the potential to safely maximize utilization of the donor pool. Because the scarcity of quality organs is the major problem affecting the global efficiency of transplantation, the results of a better method for preparing organs for transplant will be felt almost immediately.

US-A-2005/0153271 describes a transportable organ preservation system that substantially increases the time during which the organ can be maintained viable for successful implantation into a recipient. A chilled oxygenated nutrient solution can be pumped through the vascular bed of the organ after excision of the organ from the donor during transport.

US-A-2004/0224298 relates to an organ perfusion apparatus and method that monitor, sustain and/or restore viability of organs and preserve organs for storage and/or transport.

Further examples of perfusion systems for organ preservation are described in US-A-4186565 and US-A-2005/0026132.

CA-A-2112952 describes the preservation of organs removed for transplant, particularly the human liver removed for transplant, and especially methods, apparatus and perfusion solutions for preserving these organs, the perfusion solutions containing an aqueous fatty emulsion and, as an oxygen source, a perfluorocarbon emulsion.

Hayashi et al., Combination splitting using both in situ and ex situ techniques in triple split liver transplantation in pigs, Transplant International (1998) 11: 408-412 discloses application of split liver transplantation (SLT), examining the effects of a technique combining both ex situ and in situ splittings in triple SLT in pigs and compared it to ex situ splitting alone. In the combination splitting group, the splitting between the right and left lobes was done in situ with perfusion of the left lobe with cold, lactated Ringer's solution; that between the lateral and medical right lobes was done ex situ in back-table surgery.

### SUMMARY OF THE INVENTION

In accordance with the present invention, a method of splitting a liver *ex situ* using a machine perfusion apparatus comprises:
a) receiving in the machine perfusion apparatus a liver in need of preservation or treatment;
(b) introducing into the machine perfusion apparatus a perfusion solution;
(c) splitting the whole liver *ex situ* into two or more grafts to be transplanted by a surgical method while machine perfusion of the liver is ongoing, whereby the perfusion and splitting of the whole liver is conducted such that:
   - hilar structures are left intact so that each of the resulting grafts thereof continue to undergo machine perfusion with the perfusion solution; and
   - hilar structures are separated to complete the split at the termination of machine perfusion preservation.

### BRIEF DESCRIPTION OF THE DRAWINGS

FIGURE 1 is a schematic diagram of one example of an apparatus for machine perfusion of human liver grafts;
FIGURE 2 is a side view of a second example of a portable machine perfusion apparatus;
FIGURE 3 is a schematic of a portable machine perfusion apparatus with one-piece construction wherein the temperature of the system is regulated by convection cooling and convection heating;
FIGURE 4 is a schematic of a portable machine perfusion apparatus with one-piece construction wherein the temperature of the system is regulated by conduction cooling and convection heating;
FIGURE 5 is a schematic of a portable machine perfusion apparatus with two-piece construction wherein the temperature of the system is regulated by conduction cooling and convection heating;
FIGURE 6 is a cross-sectional side view of the portable machine perfusion apparatus shown in general in Figure 2 and further diagrammed in Figure 4;
FIGURE 7 is an exploded cross-sectional view of the organ compartment of the portable machine perfusion apparatus shown in Figures 2 and 6 detailing the fluid circulation pattern;
FIGURE 8 is a general cross-sectional side view of the organ compartment of the portable machine perfusion apparatus shown in Figures 2 and 6;
FIGURE 9 is a flow diagram for the portable machine perfusion apparatus, wherein the electronics and transducers of the apparatus are disposable;
FIGURE 10 is a flow diagram for the portable machine perfusion apparatus, wherein only the transducers of the apparatus are disposable;
FIGURE 11 is a block diagram of the systems control of the portable machine perfusion apparatus, showing the input and output signals of the control computer;
FIGURE 12 is a circuit diagram of the custom signal amplifier used in the perfusion apparatus; and
FIGURES 13A and 13B illustrate trends of post-transplant liver function tests in miniature swine, comparing machine preservation and cold storage. 13A shows the amount of aspartate transaminase activity present post-transplant. 13B Shows the concentration of Bilirubin present post-transplant.

### DETAILED DESCRIPTION OF THE INVENTION AND OF COMPARATIVE EXAMPLES

Described herein is a method and apparatus for exsanguination or replacement of blood with aqueous treatment medium in body tissues such as vascular organs. An aspect described herein is that the exsanguination or blood replacement is performed in a manner that leaves little damage to the organ or tissue and preserves all functional cells.

The method and apparatus described herein have varied uses, non-limiting examples of which are set forth in this specification. For the purposes of this specification, uses of the apparatus and method described herein for blood replacement, unless otherwise noted, are also uses of the apparatus and method described herein for exsanguination and the terms may be used interchangeably herein. Also, for the purposes of this specification, use of the apparatus and method described herein with a tissue or organ can mean use of the system with a single organ, a plurality of organs, or a body tissue or tissues, unless otherwise noted.

Described herein are methods and apparatuses for exsanguination or replacement of blood with preservative or treatment medium in vascularized organs and vascular tissue while preserving all functional cells. In one example, the invention is used for preserving an organ for transplant or other use using machine perfusion. Specific examples are set forth below using liver as an example donor organ. These examples should not be construed to limit the apparatuses and methods described herein to use with donor livers. It should be apparent to one of skill in the art that the apparatuses and methods described herein may be used with other organs and tissues, for example, hearts, kidneys, pancreases, and lungs.

Throughout this description, like elements are referred to by like numbers as shown in the drawings with increments of 100 between figures.

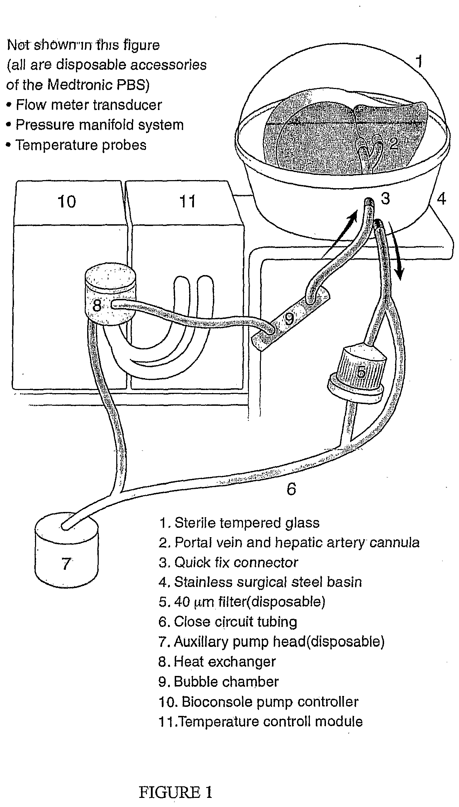

In one example, the machine perfusion apparatus described herein is a modification of the Medtronic Portable Bypass System® (PBS) sold by Medtronic, Inc., which is described in U.S. Patent 5,823,986. This example is as shown in the schematic of Figure 1.

In this example, the tissue graft is continuously perfused with cold machine preservation solution by the perfusion apparatus. The apparatus, unlike commercially available organ preservation devices, utilizes a centrifugal pump that can deliver a constant flow of preservation solution with laminar, low shear flow. Flow is adjusted using the pump controller 10, and the temperature is maintained by the blood temperature controller 11. The apparatus is set up and used as described in the Medtronic PBS manual for the apparatus as an extracorporeal bypass circuit, except that the connections will be to the stainless surgical steel basin 4 containing the liver graft rather than to the patient, and no oxygenation will be used.

During removal of the donor organ, the surgeon procures a segment of donor aorta from the diaphragm to the superior mesenteric artery *en bloc* with the liver graft. This segment of aorta does not interfere with procurement of any other organ. The proximal aorta will be cannulated by the surgeon using a reusable metal cannula attached to the PBS tubing. This technique of arterial cannulation using a segment of donor aorta is identical to the technique used for cannulation of the renal artery for machine perfusion of kidneys.

The surgeon then secures a second metal cannula to the superior mesenteric/portal vein junction. During procurement of the graft, excess length of superior mesenteric and portal vein will be obtained, which permits insertion of the cannula without injury to the main portal vein, which is used for vascular reconstruction during transplantation.

The liver graft is then placed in a closed surgical steel basin 4, which is covered with a sterile tempered glass lid, **1.** The cannulae are connected to the circuit's bypass tubing via quick fix connectors **3.** The apparatus has a centrifugal pump that delivers cold preservation solution to the graft via the aorta and mesenteric vein cannulas **2,** and recirculates effluent solution collected from the hepatic veins. Effluent also forms a bath of preservation solution around the liver, topically cooling the surface of the graft. The PBS therefore accomplishes two functions in its interface with the graft: continuous delivery of substrates to the tissue and core cooling of the tissue via the console's built-in heat exchanger **8.** The protocol of this specific example does not utilize oxygenation nor is a membrane oxygenator a part of the circuit, but such elements could be present in other examples.

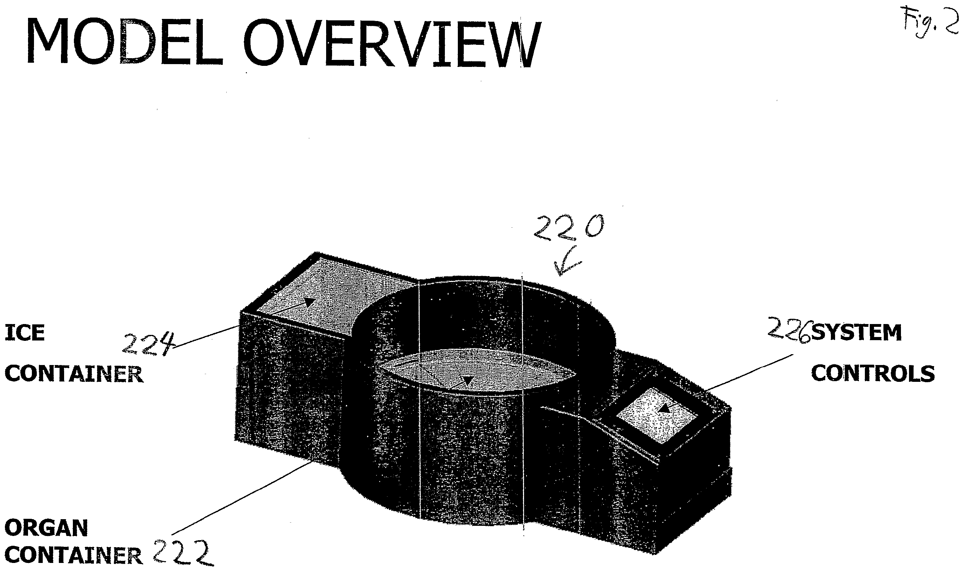

In a second example, the machine perfusion apparatus is contained in a portable unit as shown schematically in Figure 2. Generally, the portable machine perfusion apparatus **220** comprises a tissue container **222,** a removable ice container for cooling **224,** and system control computer **226,** for controlling the pump speed and system temperature.

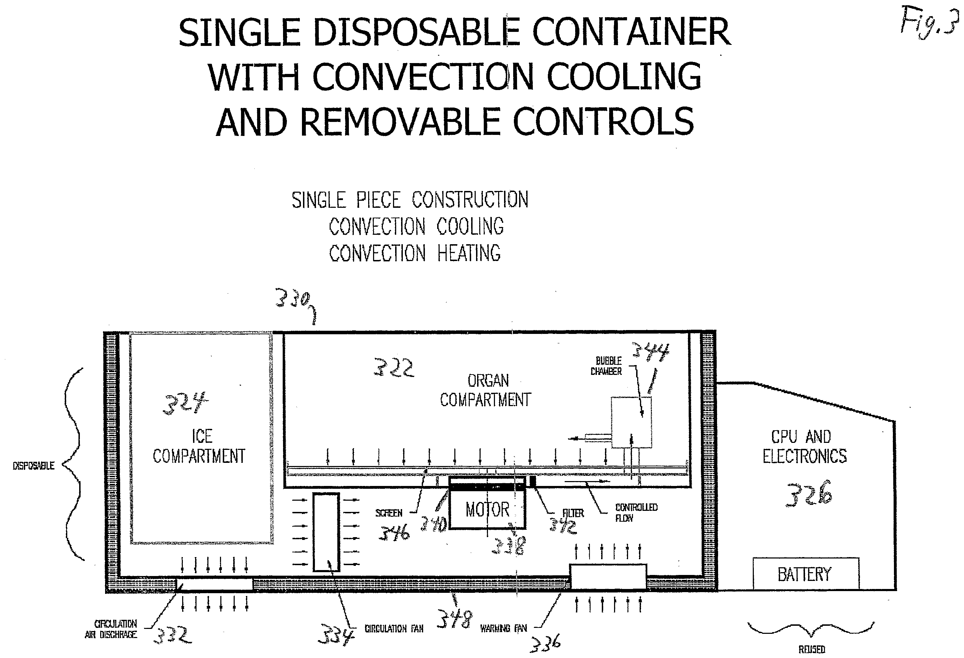

The temperature of the portable apparatus can be maintained by various methods. In one example, the temperature of the apparatus is maintained by a convection method, as pictured in the schematic of Figure 3. In the convection model **330,** the temperature of the system is controlled by a discharge vent **332,** a circulation fan **334** and a warming fan **336.** Cold air surrounding the removable ice container **324** is either circulated by the circulating fan **334** or discharged by the air discharge vent **332.** Warm air is brought into the system by the warming fan **336.** The speed of the fans is regulated by the system control computer **326** to maintain the desired temperature of the tissue and the perfusion fluid. Perfusion fluid is circulated by a pump comprising a motor **338** and an impeller **340** controlled by the system control computer **326** which pumps the fluid in a controlled manner through a filter **342,** a bubble chamber **344** and finally through the tubing that connects the bubble chamber with the cannulated tissue into the tissue. After passing through the tissue, effluent passes through a screen **346** in the floor of the tissue container **322** and into the pump inlet to be re-circulated through the system. The entire housing of the system, except for the system control computer **326,** is encased in an insulated enclosure **348.** In one example, all of the components except for the system control computer **326** are disposable, as denoted in Figure 3.

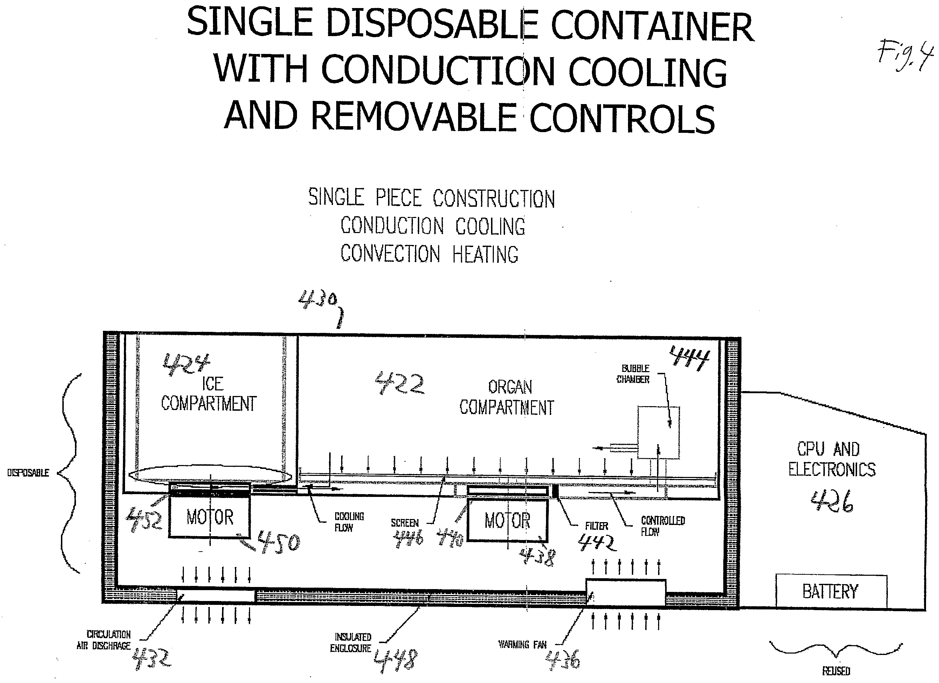

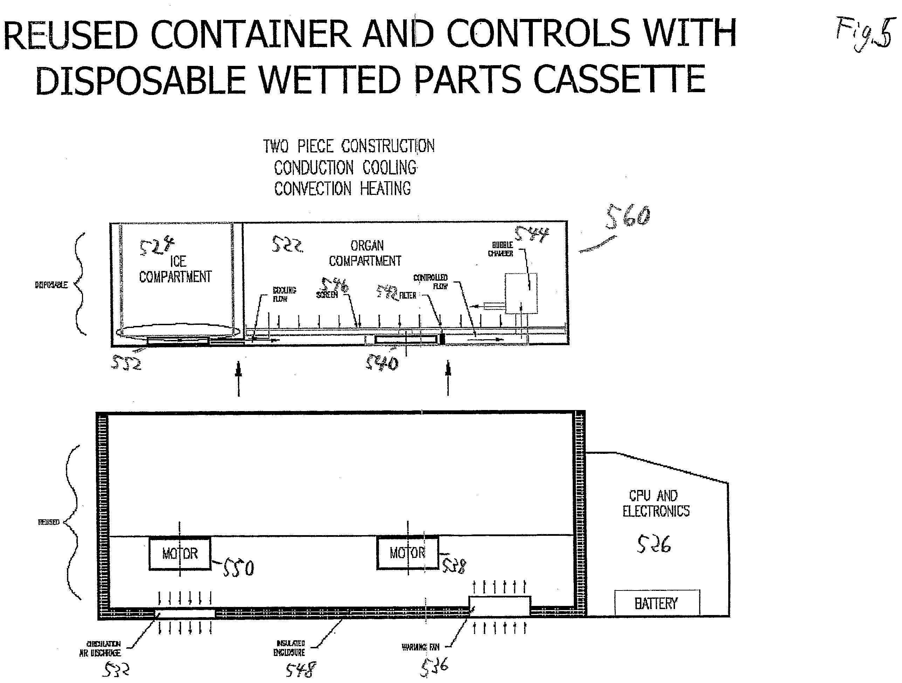

In another example **430,** the temperature is regulated by conduction cooling and convection heating as shown in the schematic of Figure 4. Perfusate circulation in this system is similar to that described in the convection model of Figure 3. Perfusion fluid is circulated by a pump comprising a motor **438** and an impeller **440** controlled by the system controls **426** which pumps the fluid in a controlled manner through a filter **442,** a bubble chamber **444** and finally through the tubing that connects the bubble chamber with the cannulated tissue into the tissue. After passing through the tissue, effluent passes through a screen **446** in the floor of the tissue container **422** and is pulled by a second pump comprising a second motor **450** and a second impeller **452** to flow past the removable ice container **424.** The perfusion fluid is then cooled by conduction and pumped back into the tissue container **422.** Warming is still accomplished by convection, as warm air is brought into the system by the warming fan **436** and circulated out the discharge vent **432.** In one example, all of the components except for the system control computer **426** are disposable, as denoted in Figure 4. In another example, the parts of the apparatus that come in contact with the tissue, ice or perfusion fluid are contained in a disposable cassette **560,** as shown in Figure 5. In the example diagrammed in Figure 5, all of the components perform the same function as described in Figure 4 and are numbered as such with an increment of 100.

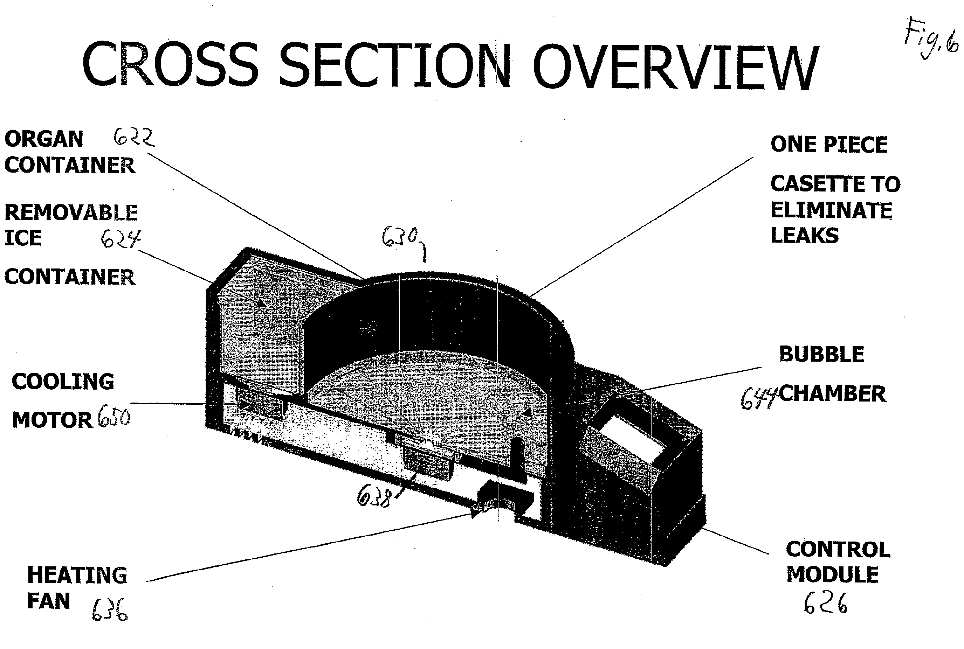

Figure 6 shows a cross-sectional of the example of the portable machine perfusion apparatus shown in general in Figure 2 and diagrammed by the schematic of Figure 4. All of the components shown perform the same function as described in Figure 4 and are numbered as such with an increment of 100.

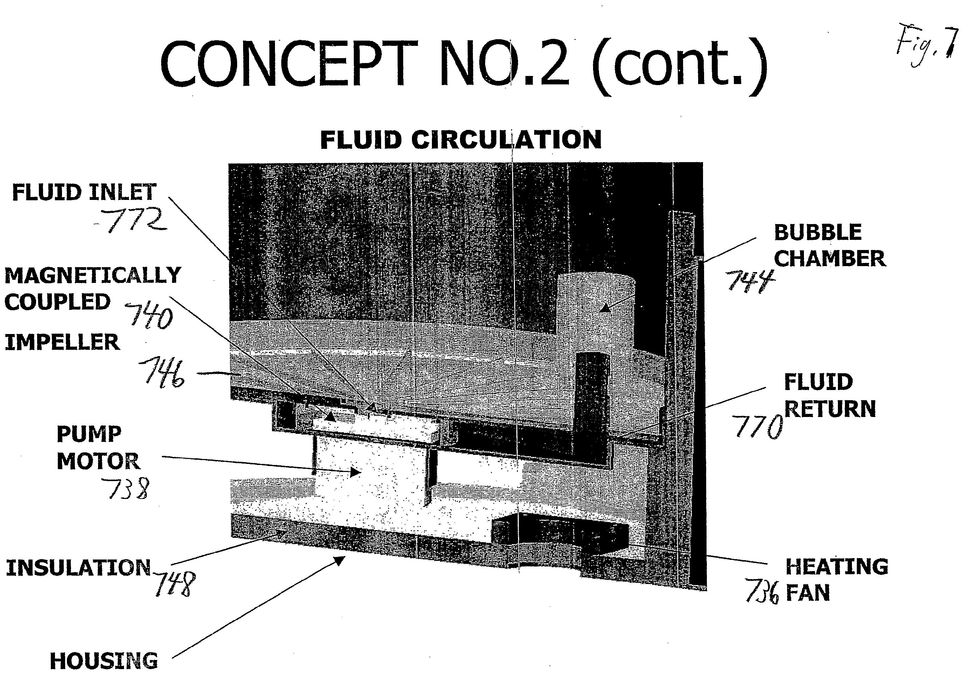

Figure 7 is a close-up cross sectional schematic of an example of the tissue container showing the fluid circulation system. The pump motor **738** drives the impeller **740** to pump perfusate through the bubble chamber **744** and into the tissue as described in Figures 3 and 4. After passing through the tissue, the effluent passes through a screen **746** on the floor of the tissue container and is collected in the fluid return **770** and pulled into the pump impeller **740** through the fluid inlet **772.**

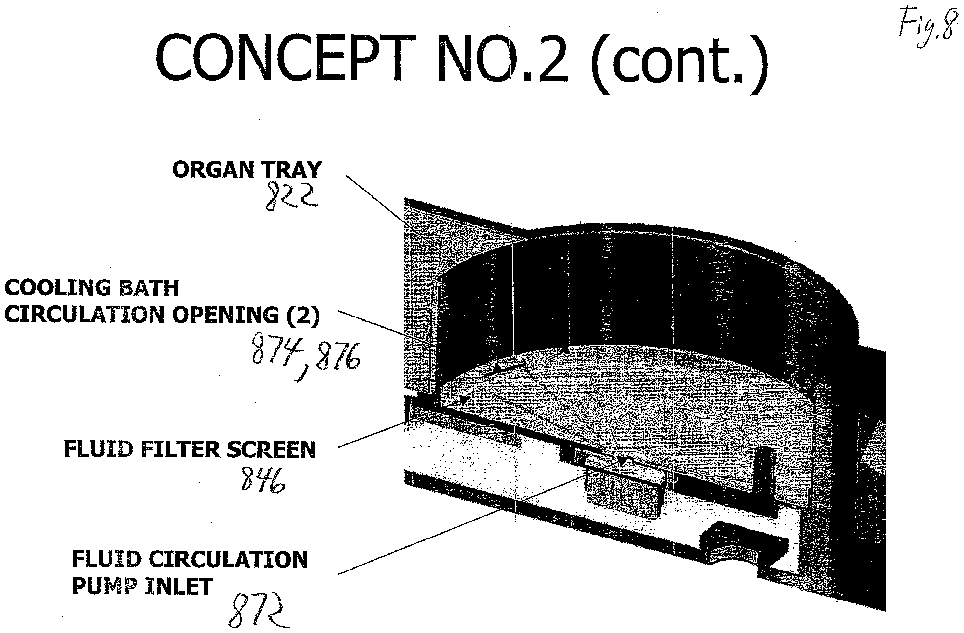

A more general cross-sectional schematic of an example of the tissue container for the apparatus diagrammed in Figure 4 is shown in Figure 8. After passing through the tissue as described in Figure 7, the effluent from the tissue is re-circulated by passing through a screen **846** and being pulled through the pump fluid inlet **872.** The perfusion fluid surrounding the tissue is circulated for conduction cooling through the impeller **452** as described in Figure 4 through the circulation openings **874** and **876.**

With reference to the pump to be used, in an example, the pump to be used is a centrifugal pump. In an example, the pump is a centrifugal pump that allows for delivery of a constant flow of perfusate with low-shear, laminar flow. Low-shear, laminar flow is preferred, as it allows the tissue to be perfused with little to no damage to the vascular tissues, in contrast to currently available kidney preservation apparatus. This type of flow also reduces intravascular turbulence, which can lead to perfusion damage. A non-limiting example of a pump for the preferred embodiment of the invention is the Bio-Pump® Plus centrifugal pump from Medtronic, Inc. (http://www.medtronic.com/cardsurgery/arrested_heart/centrifugal_pump.html). The Bio-Pump Plus has a vertical cutwater outlet design that reduces shear forces 40%. It will be apparent to those of skill in the art that various centrifugal pumps with various impeller designs delivering low-shear, laminar flow can be used in the apparatuses and methods described herein.

In an example, the portable machine perfusion apparatus is powered by a battery power supply. An example of a preferred battery is a rechargeable sealed lead acid type battery. The sealed lead acid battery is safe to handle, has a long shelf life, and a deep duty cycle. It is easy to recharge, has a high charge density and a high cycle life. In an example, the machine perfusion apparatus contains at least two battery slots for performing a battery hot swap. As one of the objects of the present disclosure is a portable machine perfusion apparatus, the weight of the overall apparatus is to be kept to a minimum. By allowing the batteries to be exchanged, smaller and lighter weight batteries may still be used while still allowing the system to be operative for long periods of time, such as for hours or days.

In an example, the pump is controlled by the system controls using pulse width modulation control. Pulse-width modulation control works by switching the power supplied to the motor on and off very rapidly. The DC voltage is converted to a square-wave signal, alternating between fully on (nearly 12v) and zero, giving the motor a series of power pulses. If the switching speed of such a system is high enough, the motor runs at a steady speed due to the momentum of its flywheel. The motor speed of a pulse-width modulation system can be varied by adjusting the duty cycle of the system. This type of control is advantageous for use in the apparatuses and methods described herein, because the output transistor is either on or off, not partly on as with normal regulation, so less power is wasted as heat and smaller heat-sinks can be used. The use of smaller heat sinks allows for the construction of a portable perfusion apparatus while still allowing critical temperature regulation.

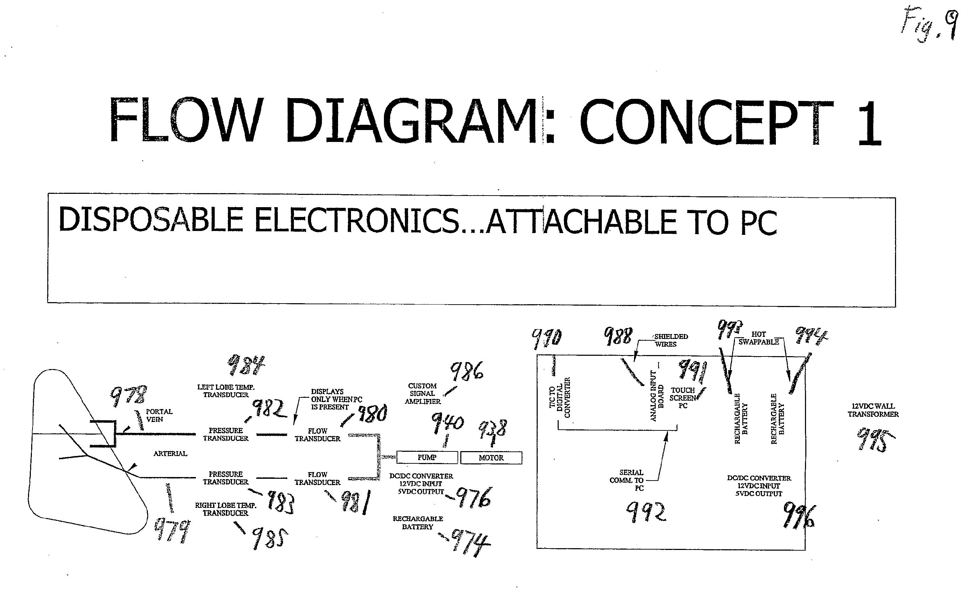

In one example of the portable machine perfusion apparatus, the electronics of the system are disposable and are connected to reusable system controls or an outside computer. A flow diagram of this example is shown in Figure 9, using liver perfusion as a non-limiting example. A rechargeable battery **974** sends current through a 12V to 5V DC/DC converter **976** to drive a motor **938** that turns the pump impeller **940** to pump fluid through tubing for the left **978** (portal vein) and right **979** (hepatic artery) lobes. In each tube, perfusate flow passes through a flow transducer **980, 981** and a pressure transducer **982, 983** while the temperature of the perfusate is measured by a temperature transducer **984, 985.** Signals from the flow and pressure transducers **980, 981, 982, 983** are amplified with a custom signal amplifier **986** and received by the analog input board **988.** Signal from the temperature transducers **984, 985** are received by the T/C to digital converter **990.** All received signals are communicated to a touch screen computer **991** through a serial communications component **992.** The computer **991** is powered by either hot swappable rechargeable batteries **993, 994** or through house current flowing through a 12V DC wall transformer **995.** Voltage is converted by a second 12V to 5V DC converter **996.**

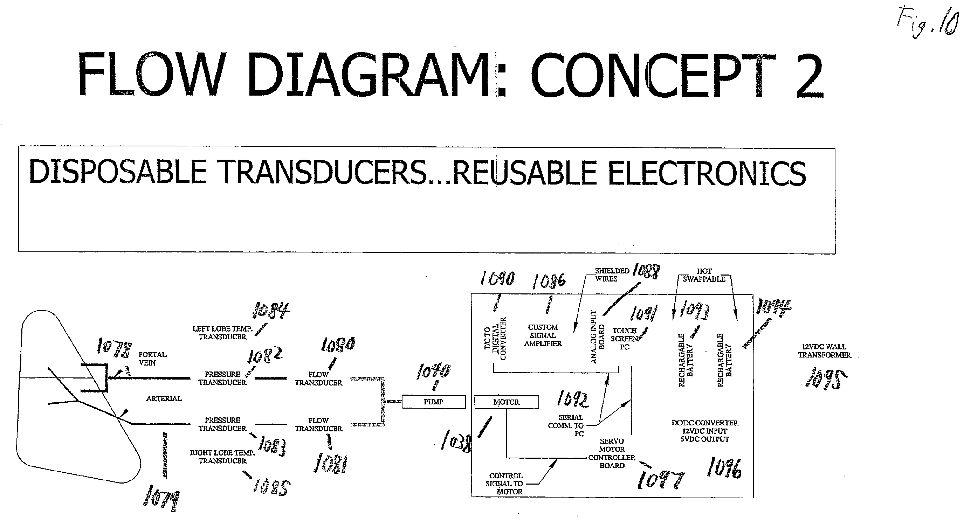

In another example, the electronics of the portable machine perfusion apparatus are reusable, and only the transducer part of the system is disposable. A flow diagram of this example is shown in Figure 10, using liver perfusion as a non-limiting example. Components have the same function as in Figure 9, and are numbered as such in an increment of 100. In the example of Figure 10, the motor **1038** is not disposable and is driven by the power source of the non-disposable components. In this example, the speed of the motor is controlled by a servo motor controller board **1097,** which receives input from the computer **1091.**

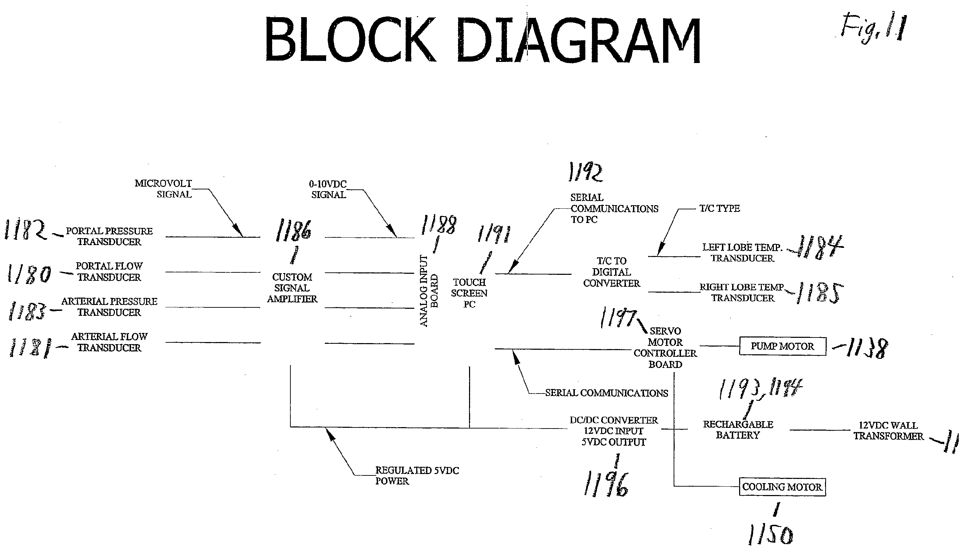

Figure 11 is a block diagram further describing the control system diagrammed in Figure 10. All components are numbered in the same manner, in an increment of 100. In Figure 11, the cooling motor **1150** is also controlled by the servo motor controller board **1197.**

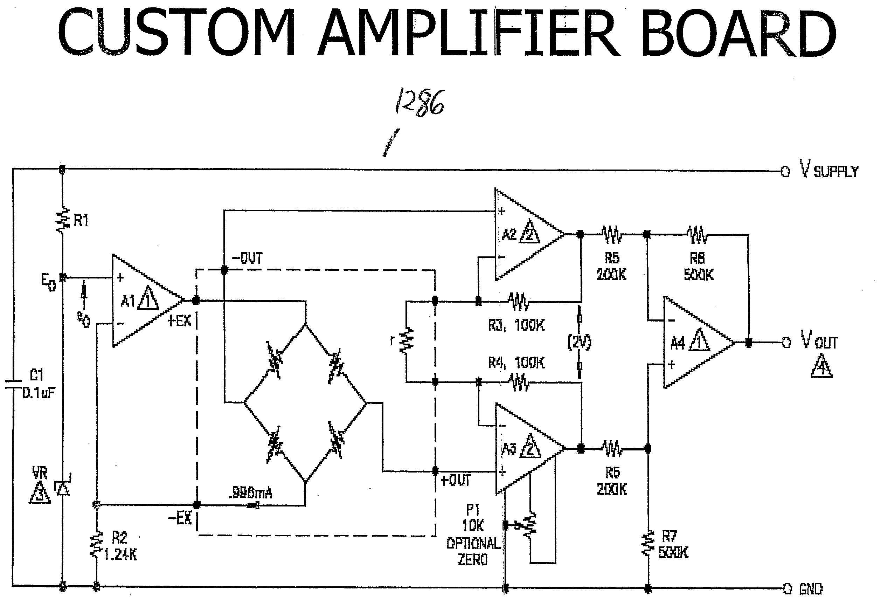

An example of an amplifier board to for the custom signal amplifier **986, 1086, 1186** of Figures 9, 10 and 11 is shown as a schematic drawing in Figure 12.

Effective preservation of the tissue can be obtained at a variety of perfusate temperatures, including a range from hypothermic temperatures (about -10°C) to standard human body temperature (about 37°C). In an example, the temperature of the perfusate is maintained between 0°C and 4°C. Likewise, the flow rate of the perfusate can be effective over a broad range of rates, from about 0.5 cubic centimeters per minute (cc/min) to about 5,000 cc/min.

With reference to the procurement of an organ, all cadaver donors must meet the standard criteria for brain death and procurement, and can be coordinated through an organ procurement organization. The donor liver could be procured by any common technique in the art. In an example, the surgical technique used for donor hepatectomy is a rapid *en bloc* procurement essentially as originally described by Starzl (Ann Surg 1989; 210:374-386). As described above, a segment of donor aorta is procured *en bloc* with the graft, which will not interfere with other organs being procured. Similarly, extra length of superior mesenteric/portal vein will be procured if the pancreas and small bowel are not being harvested. A core biopsy (tru cut) of the liver graft is performed. The biopsy is not interpreted at the time of procurement (frozen sections will not be performed) unless requested by the surgeon for clinical reasons, such as the appearance of the liver, unexpected findings, etc..

A summary of one possible surgical technique for procurement of a liver that may be used with the methods described herein is outlined below:

Surgical Technique of Rapid *En bloc* Procurement of liver grafts:
1. Long midline laparotomy and median sternotomy.
2. Exploration of the chest and abdomen to exclude malignancy.
3. Mobilization of the liver along the cardinal ligaments.
4. Kattell maneuver to expose the retroperitoneum.
5. Exposure of the distal aorta.
6. Exploration of the lesser sac and potential replaced left hepatic artery
7. Exploration of the Foramen of Winslow and indentification of a replaced right artery.
8. Exposure of the supraceliac aorta.
9. Exposure and cannulation of the inferior mesenteric vein.
10. Exposure of the common bile duct and irrigation of the biliary tract.
11. The left gastric and splenic artery are identified and ligated (this may be performed after crossclamp at the discretion of the procurement surgeon).
12. Mobilization of the pancreas for *en bloc* procurement with the liver, if the pancreas is to be utilized.
13. Heparinization of the donor.
14. Cannulation of the distal aorta.
15. Crossclamp, venting of the IVC, initiation of *in situ* flush with preservation solution, and topical cooling of the abdomen with ice slush (see protocol below).
16. Post flush *en bloc* removal of the liver and vascular pedical: includes division of the IVC, diaphragm surrounding the IVC, and dissection of the hepatic artery proximally to include the celiac artery. The donor aorta will be removed *en bloc* with the liver from the diaphragm proximally to the superior mesenteric artery distally.
17. The liver is weighed. The liver is again flushed on the back table with additional solution until the effluent is clear, and then packaged in a sterile container according to standard UNOS protocols for storage and transport.

The organ is flushed and prepared for preservation as in the non-limiting example that follows. It should be apparent to one of skill in the art that any potential protocol that prepares the organ for preservation could be used within the apparatuses and methods described herein, regardless of preservation solutions or volumes of solution used. In one protocol, the organ may be flushed with an organ preservation solution, such as University of Wisconsin (UW) solution, which is sold by Barr Laboratories as ViaSpan® and is described in U.S. Patents 4,798,824 and 4,879,283. Alternatively, the organ may be flushed with the preservation solution Vasosol, as descrbed in U.S. Patent Application publication 2002/0064768.

Summary of Liver preservation protocol.
1. Rapid *en bloc* multi organ surgical procurement as described by Starzl et al. (Ann Surg 1989; 210:374-386)
2. *In situ* aortic flush: 3 Liters of UW solution.
3. *In situ* portal flush: 1 Liter of UW solution.
4. Back table Hepatic artery flush: 300cc of UW solution.
5. Back table Portal Flush: 650cc of UW solution.
6. Bile duct: 50cc of UW solution.
7. Packaged in 500cc of UW solution.
8. Triple packaged in sterile bags in a UNOS approved cold storage container, packed with ice.
9. Livers are returned to the Preservation Unit for Machine Perfusion.

In an example, the method of perfusion of the organ or other tissue occurs according to the following protocol. It is to be understood that variations of the protocol below can be used with the apparatuses and methods described herein.

### Protocol for Cannulation and Bench Work of Donor Liver or Machine Perfusion

All work on the donor liver will be performed in a class 100 sterile operating room, which is equipped with a laminar flow ventilation system.

Cannulation of the graft portal vein and hepatic artery is indirect and therefore atraumatic, preserving the graft vessels for anastomosis in the recipient. The machine perfusion protocol for procurement and cannulation were designed to perfuse the organ using segments of vessels that are far away from the vascular anastomoses performed in the recipient procedure. These procedures are performed by the donor surgeon with the assistance of the preservationist.

### Preparation of the Inferior Vena Cava (IVC)

The IVC is dissected and cleaned. Small short hepatic veins are doubly ligated and divided. Phrenic branches are ligated and the diaphragmatic cuff is dissected off the bare area of the right lobe and discarded.

### Preparation and Cannulation of the Aortic conduit

The aortic segment is cleared and small lumbar branches are ligated with fine silk ties. The celiac axis is dissected to the common hepatic artery . The splenic and laft gastric arteries are tied near their origin. The hepatic artery is followed to the proper hepatic artery. The gastroduodenal artery is ligated with a 3-0 silk tie. Small phrenic and lymphatic branches are ligtated as necessary. An appropriate sized stainless steel reusable sterile cannula (Waters Medical, Rochester, MN) is introduced into the proximal segment of aorta and secured with umbilical tape. The distal segment of aorta is closed with a bulldog clamp. If there is a small distance of aorta below the celiac axis then the distal aorta is oversown in a running fashion with a 5-0 prolene suture.

### Preparation and Cannulation of the Portal Conduit

The superior mesenteric vein and portal vein are dissected. Small branches are ligated with silk ties. A 22 gauge angiocath is inserted into the splenic vein orifice and threaded to the portal vein and secured with a silk tie. An appropriate sized stainless steel reusable sterile cannula (Waters Medical, Rochester, MN) is introduced into the proximal segment of the superior mesenteric vein and secured with a 0 silk tie.

### Initiation of Perfusion

The liver is placed in a surgical basin and the aortic and portal cannulae are attached to the inflow lines on the machine perfusion apparatus via quick fix connectors. A temperature probe is placed into each lobe (segment 2 and 8). Twenty-two gauge angiocatheters are introduced into the proximal aortic conduit and into the mesenteric vein for pressure monitoring. The aortic and portal pressure catheters are connected to the machine perfusion device, which has a built in pressure transducer.

Perfusion is initiated at a flow rate of 0.66cc/g/minute. The first 500cc of effluent is collected and discarded, in order to remove residual cold storage solution within the graft. Priming of the circuit with excess machine preservation solution allows the effluent to pool in the basin and accomplish topical surface cooling of the liver in addition to the core cooling accomplished by vascular perfusion. The flow rate will be increased over the next 15 minutes to the target flow rate (see Table 1) based on the size of the graft. Flow rates will be adjusted lower if portal vein pressures rise above 8mm Hg.

**TABLE 1**

| Graft Weight Based Flow Rates for Liver Perfusion | | |
|---|---|---|
| Liver Weight (g) | Flow range (cc/g/min) | Target flow (cc/minute) |
| 1100-1249 | 0.64-0.72 | 800 |
| 1250-1399 | 0.62-0.72 | 900 |
| 1400-1549 | 0.65-.71 | 1000 |
| 1550-1700 | 0.64-0.71 | 1100 |
| >1700 | 0.7 | 1200+ |

### Graft pressure ranges

The target flow rate will be calculated in advance based on the size of the graft (0.6 - 0.7 cc/g/min) and the pump speed (RPM) will be adjusted to achieve target flow rates rather than a specific pressure. Trends in graft pressures will be noted and flow rate will be adjusted lower if portal pressure exceeds 8 mm Hg, to avoid any pressure injury to the hepatic sinusoidal endothelium. In preclinical work with human discard livers, arterial pressures at target flow ranges were never more than 30mm Hg, so perfusion trauma to the hepatic arterial system is unlikely.

### Changing of the Preservation Solution

The preservation solution is changed about every four hours accordingly. The four hour limit is intended to safeguard the graft and ensure maximal preservation. In discard liver studies there was no change in perfusate characteristics during four hours of observation. For comparison, in other methods of clinical kidney perfusion, the perfusate solution is never changed during the preservation period, which can be up to 24 hours duration in some instances. However, given the fact that this is a novel technique and due to the larger physical size of the liver, a protocol has been constructed which provides fresh perfusate every four hours. This time frame is designed to ensure maximal preservation characteristics of the perfusate. While longer intervals between perfusate changes may also be practical, longer time periods have not currently been tested.

### Assessment of Perfusion and Graft Quality

Thirty minute assessments of the liver during MP will be performed, including both quantitative and qualitative variables:
Temperature
Flow
Portal pressure
Arterial pressure
Biochemistry: sodium, potassium, bicarbonate, calcium, glucose, ionized calcium Osmolarity
Lactate and pH

Hourly samples will also be saved for later aspartate aminotransferase (AST), alanine aminotransferase (ALT) and lactate dehydrogenase (LDH) analysis, as are well known in the art. Graft biopsies, such as needle or wedge biopsies, may be taken for analysis both pre- and post-perfusion. Samples could be analyzed for changes in gene expression and using other common medical laboratory analysis.

After perfusion is completed, the graft will be packaged in a UNOS approved cold storage container for transportation to the operating room.

As concerns the preservation fluid to be used for perfusion of the tissue, in an example, the preservation fluid used is Vasosol, a novel preservation solution described in U.S. Patent Application Publication 2002/0064789. It has been shown that HMP with Vasosol improves early graft function in renal transplantation. (Guarrera et al. Transplantation. 2004 Apr 27;77(8): 1264-8). It should be apparent to those of skill in the art that other preservation solutions can be used with the apparatuses and methods described herein, such as UW (Belzer) solution and the like.

In an example, the invention is used for *ex vivo* treatment and preservation of a tissue for transplantation. As described above, the tissue can be perfused using the apparatus of the present invention in a manner that provides metabolic substrates and removes waste products. During perfusion, the effluent of the tissue is periodically tested for various indicators of tissue health. If a tissue were to be deemed suitable for transplant by such tests, it could then be transplanted into the recipient. Further, selected therapeutic agents can be added to the perfusate. Such therapeutic agents would have the effect of improving the condition of the tissue or improving its ability to function in the recipient. The apparatuses and method described herein can be used not only for preserving tissues for human transplants, but also has utility for preserving tissues for veterinary transplantation procedures of companion animals, livestock, and other living things for which transplantations are performed.

According to the invention, there is provided a method of splitting tissues to achieve multiple grafts for transplant from a whole liver, which may be split according to the following protocol. It is to be understood that variations of the protocol below represent embodiments of the present invention only if they fall within the scope of claim 1.

### Protocol for Liver Splitting During Machine Perfusion

The liver is procured and perfusion is begun according to the protocols above. The hilar structures to the right and left lobe are dissected and identified. The graft parenchyma is scored sharply with a metzenbaum scissors and continued with blunt dissection in the desired plane of division. Crossing vessels that are encountered are clipped or ligated depending on size and surgeon preference. Hilar structures are left intact so that both graft segments may continue to undergo machine perfusion. Hilar structures are separated to complete the split at the termination of machine perfusion preservation. Two potential techniques of splitting the liver into two grafts include:
The whole liver may be split into a Right lobe graft (segments 1,5,6,7,8) for an adult and a Left lobe graft (segments 2,3,4) for a second small adult or large child.

The whole liver may be split into an Extended Right lobe for an adult (including segment 4) and a Left lateral segment graft (segment 2 and 3) for a child. A variation is the discard of segment 4 with a resulting right lobe and a left lateral graft remaining.

Other methods of liver splitting described in the art may be performed during machine perfusion (see Noujaim et al. Am J Transplant 3:318-323 (2003), Yan et al. World J. Gastroenterol 11:4220-4224 (2005), Malago et al. World J. Surg. 26:275-282 (2002), and Renz et al. Ann Surg 239: 172-181 (2004) for non-limiting examples). The resulting methods represent embodiments of the invention only if they fall within the scope of claim 1.

Liver splitting during machine perfusion has several advantages over currently performed liver splitting methods, which include *ex situ* (back table) splitting and *in situ* splitting during the procurement of the organ. Because the liver is being constantly perfused, it can be manipulated without concern of the graft being warmed by operative lights and the surgeon's hands because it is being cooled through the cold perfusion solution in the vasculature. Warming of the liver graft during splitting is thought to increase anaerobic metabolism and free radical injury. If the liver is split during machine perfusion, the core temperature of each segment of the liver does not change significantly.

Another advantage to liver splitting during machine perfusion is that the vessels of the organ are distended with perfusion solution, making them easy to clip and ligate. Additionally, because perfusion fluid is flowing through the vessels, the surgeon may be able to detect and repair leaking vessels before the organ is transplanted. This improves the hemostasis of the organ, and should allow for better graft function and stability. Liver splitting during machine perfusion is rapid and can be done under controlled flow conditions away from the donor site. Also, as it is performed *ex situ,* there is no risk to other tissues that might need to be harvested from the same donor.

In a comparative example, the present invention can be used for *ex vivo* treatment of a tissue to be re-implanted into the donor. Using such a method, selected therapeutic agents may be added to the perfusate to treat a disorder of the tissue or to improve tissue function once re-implanted.

In another comparative example, the present invention is used for pharmacological testing models. As a non-limiting example, a therapeutic agent could be tested in an isolated tissue, whereby the therapeutic agent is delivered and perfused into the tissue in blood, a blood-replacement or another perfusion solution. The effects of the therapeutic agent on the tissue can then be monitored over time.

### EXAMPLES

### Example 1 - Human Discard Protocol

Between May 2001 and March 2002, 10 non-transplantable human livers were obtained in accordance with the local Organ Procurement Organization. A model of atraumatic, centrifugal hypothermic machine perfusion (HMP) of the portal vein (PV) and hepatic artery (HA) was designed. During procurement, excess length of donor aorta and superior mesenteric/portal vein were procured with the graft; this allowed cannulation far from the area of
the recipient anastomoses. Standard bench preparation of the graft, cannulation, and perfusion were performed in a class 100 sterile room.

Livers were hypothermically perfused with Vasosol solution for 5 to 10 h using the apparatus depicted in Figure 1. The technique involved a flow-controlled system with target flow including temperature, flow, and HA and PV pressure were recorded every 30 minutes. Perfusate electrolytes were measured using an AVL automated blood gas analyzer.

Mean HMP time was 6.7 ± 1.8 hours. Target flow was 0.7 mL/g liver/mg. PV and HA pressure ranged from 3 to 5 and 12 to 18 mm Hg, respectively. All grafts maintained adequate homogenous hypothermia (3°C to 6°C) during HMP. This was verified by serially measuring deep and surface temperatures of each liver segment. There were no technical or equipment failures that required termination of HMP. Effluent AST was measured in the last three discard livers. The values correlated strongly with the liver quality and the cold ischemia time at the initiation of HMP.

### Example 2

### Animal Protocol

For proof of concept, a large animal liver transplant model was used. The study was conducted in accordance to the principles of laboratory animal care (NIH Publication No. 85-23, revised 1985).

Six miniature swine (24 to 32 kg) were used as donors. Standard liver procurement with *in situ* aortic flush with UW solution was performed. Donor swine were randomized to 12 hours of CS preservation (n=3) in ViaSpan (UW solution, Barr Laboratories, Inc. Pomona, NY, USA) or 12 hours of HMP using the apparatus depicted in Figure 1 (n=3) with Vasosol solution.

After the preservation period, donor livers were transplanted orthotopically into six swine (26 to 31 kg) without venovenous bypass using the method described by Oike (Oike et al., Transplantation, 71:328, 2001). Recipient swine received intravenous dextrose infusion for 48 hours post-transplant. Animals also received oral tacrolimus and amoxicillin PO. Serum aspartate aminotrasferase and total bilirubin were measured to asses preservation injury. Surviving animals were sacrificed and necropsied on postoperative day 5.

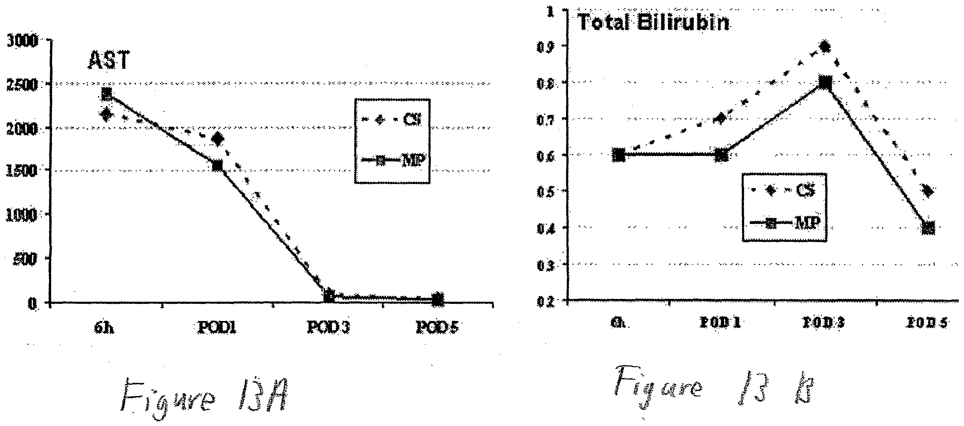

All recipient swine survived the liver transplantation procedure and awoke from anethesia. All swine had good initial liver function posttransplant and survived to postoperative day 5. Both groups had similar normalization of serum AST (Figure 13A) and bilirubin (Figure 13B) when monitored post-transplant. At necropsy, there was one arterial thrombosis in the CS group. There were no other preservation-related complications noted at the time of sacrifice.

## Claims

1. A method of splitting a liver *ex situ* using a machine perfusion apparatus (220, 320, 430, 630), the method comprising the steps of:
(a) receiving in the machine perfusion apparatus a whole liver in need of preservation or treatment;
(b) introducing into the machine perfusion apparatus a perfusion solution;
(c) splitting the whole liver *ex situ* into two or more grafts to be transplanted by a surgical method while machine perfusion of the whole liver is ongoing,
wherein the perfusion and splitting of the whole liver is conducted such that:
- hilar structures are left intact so that each of the resulting grafts thereof continue to undergo perfusion with the perfusion solution; and
- hilar structures are separated to complete the split at the termination of machine perfusion preservation.

2. The method according to claim 1, wherein the output flow rate of the perfusion solution is from 0.5 cubic centimeters per minute (cc/min) to 5,000 cc/min.

3. The method according to claim 1, wherein the perfusion solution is maintained at a temperature from -10°C to 37°C.

4. The method according to claim 1, wherein the perfusion solution is a preservation solution.

## Patentansprüche

1. Verfahren zum Spalten einer Leber *ex situ* unter Verwendung einer maschinellen Perfusionseinrichtung (220, 320, 430, 630), wobei das Verfahren Folgendes umfasst:
(a) Empfangen einer ganzen Leber, die eine Konservierung oder eine Behandlung benötigt, in der maschinellen Perfusionseinrichtung;
(b) Einführen einer Perfusionslösung in die maschinelle Perfusionseinrichtung;
(c) Spalten der ganzen Leber *ex situ* in zwei oder mehr Transplantate, die durch ein chirurgisches Verfahren transplantiert werden sollen, während das maschinelle Perfusieren der ganzen Leber fortschreitet,
wobei das Perfusieren und das Spalten der ganzen Leber derart durchgeführt wird, dass:
- Hilusstrukturen derart intakt gelassen werden, dass jedes der resultierenden Transplantate davon weiterhin ein Perfusieren mit der Perfusionslösung erfährt; und
- Hilusstrukturen getrennt werden, um das Spalten an dem Ende des maschinellen Perfusionskonservierens zu vervollständigen.

2. Verfahren nach Anspruch 1, wobei die Ausgangsflussrate der Perfusionslösung von 0,5 Kubikzentimetern pro Minute (cc/min) bis 5.000 cc/min ist.

3. Verfahren nach Anspruch 1, wobei die Perfusionslösung bei einer Temperatur von - 10 °C bis 37 °C gehalten wird.

4. Verfahren nach Anspruch 1, wobei die Perfusionslösung eine Konservierungslösung ist.

## Revendications

1. Procédé de partage d'un foie *ex situ* au moyen d'un appareil de perfusion mécanique (220, 320, 430, 630), le procédé comprenant les étapes consistant à :
(a) recevoir un foie entier nécessitant une conservation ou un traitement dans l'appareil de perfusion mécanique ;
(b) introduire une solution de perfusion dans l'appareil de perfusion mécanique ;
(c) partager le foie entier *ex situ* en deux ou plusieurs greffons à transplanter par une méthode chirurgicale pendant que la perfusion mécanique du foie entier est en cours,
dans lequel la perfusion et le partage du foie entier sont effectués de telle sorte que :
- les structures hilaires sont laissées intactes de sorte que chacun des greffons obtenus continue à subir une perfusion avec la solution de perfusion ; et
- les structures hilaires sont séparées pour compléter le partage à la fin de la préservation de la perfusion mécanique.

2. Procédé selon la revendication 1, dans lequel le débit de sortie de la solution de perfusion est de 0,5 centimètres cubes par minute (ml/min) à 5 000 cc/min.

3. Procédé selon la revendication 1, dans lequel la solution de perfusion est maintenue à une température de -10°C à 37°C.

4. Procédé selon la revendication 1, dans lequel la solution de perfusion est une solution de conservation.
